## Europäisches Patentamt
## European Patent Office
## Office européen des brevets

(11) Publication number: **0 127 180**
**A2**

(12) **EUROPEAN PATENT APPLICATION**

(21) Application number: **84106144.3**

(22) Date of filing: **29.05.84**

(51) Int. Cl.³: **F 16 D 55/22**

(30) Priority: **31.05.83 SE 8303053**

(43) Date of publication of application:
**05.12.84 Bulletin 84/49**

(84) Designated Contracting States:
**AT BE CH DE FR GB IT LI LU NL SE**

(71) Applicant: **AB KELVA**
**Box 1126**
**S-221 04 Lund(SE)**

(72) Inventor: **Warfvinge, Kjell**
**P.O. Box 1126**
**S-221 04 Lund(SE)**

(74) Representative: **Asketorp, Göran P. et al,**
**Lars Holmqvist Patentbyra AB Box 4289**
**S-203 14 Malmö 4(SE)**

(54) A disc brake.

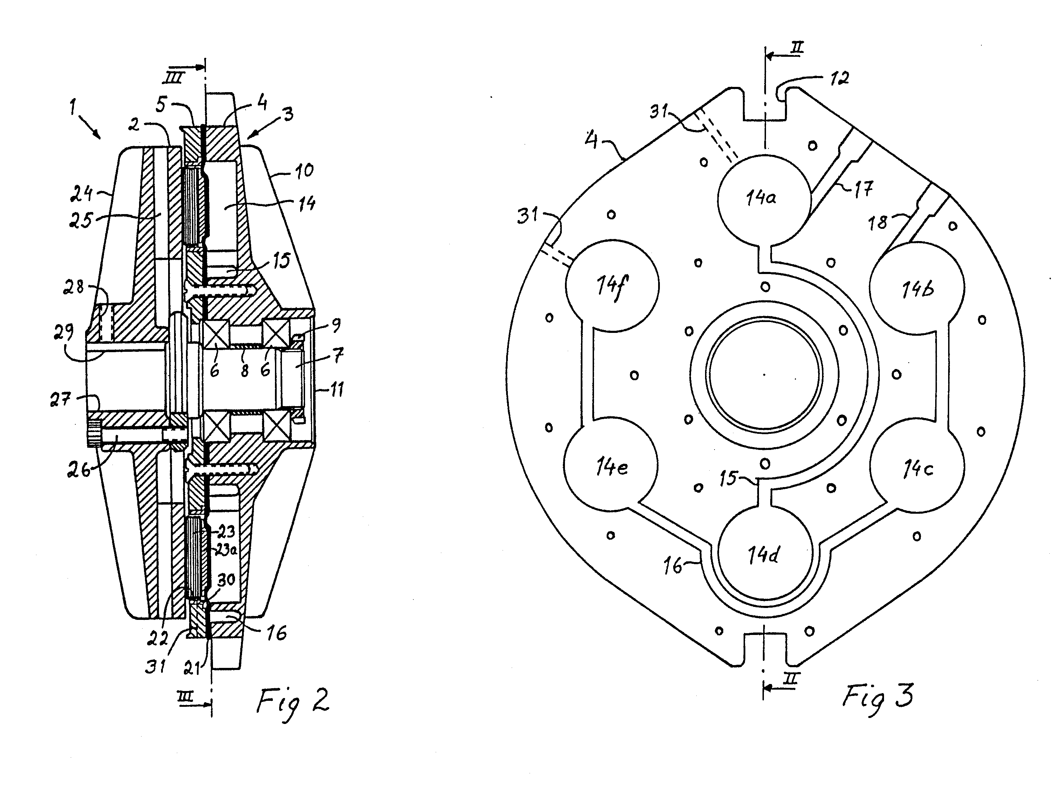

(57) Disc brake comprising a disc (2) and a membrane housing (3). The membrane housing (3) comprises a housing (4), the inturned surface of which comprises six recesses (14) and channels (15, 16). An intermediate plate (5) comprising six openings (22) is positioned opposite to the recesses (14). A membrane (21) separates the recesses (14) and the openings (22). Brake pads (23) are positioned in the openings (22). The recesses are interconnected in a two-circuit system with two diametrically positioned recesses (14a, 14d) connected to a first hose coupling and the remaining four recesses (14b, 14c, 14e, 14f) connected to a second hose coupling. In this way two, four or six brake pads can be operated (Figure 2).

Fig 2

1

## A DISC BRAKE

The present invention relates to pneumatically operated disc brakes intended to brake rolls of e.g. paper, plastic film, cellophane or similar. Such brakes are e.g. used for controlling the web tension of such rolls.

Disc brakes of this type are manufactured in different sizes and dimensions in order to give a brake torque, which is suitable for the application. Usually, the disc brake comprises one or several brake discs, against which brake pads are pressed with varying forces. The brake pads are powered with pressurized air, but also hydraulic powering is common. Mechanical operation is used in a few cases.

In order to adjust the brake torque between desired limits, the pressurized air is supplied with different pressures and the brake torque is most often a linear function of the air pressure. In order to adjust the brake torque between different applications, several pneumatic units are often used having brake pads distributed around the periphery of the disc. This units are interconnected in a fixed coupling or with switch-over valves, several units being used when a high brake torque is required. In this way one and the same brake can be used at a greater range of brake torques, whereby less sizes are needed to stock.

However, such a construction with several pneumatic units entails that the disc brake will be assembled by a great number of details and components. The different pneumatic units are interconnected by means of external hoses, which thus are exposed to the risk of being hooked. The assembly will often be complex and the stock of spare parts will be extensive. This will in turn result in an expensive construction.

The object of the present invention is to provide a disc brake, which regarding flexibility and utility is equally good or better than previously known constructions, but which comprises considerably fewer details and which is considerably cheaper to manufacture and maintain.

This object is achieved according to the invention by means of a disc brake comprising a brake disc and at least two pneumatically operated brake pads. According to the invention these brake pads are placed in a membrane housing which is divided into two parts. A first part comprises shafts, bearings, washings and similar in order to support the disc brake and comprises moreover a system of pressure chambers, which are interconnected and connected to a source of pressurized air. The second part comprises openings, which preferably are circular and comprises the brake pads. Between the first and the second part there is placed a membrane, which seals the pneumatic system. The two parts are interconnected by means of a great number of screws, so that the pressure and the tension are equally distributed.

Preferably, the disc brake according to the invention comprises six brake pads interconnected in a two-circuit system, in which the first circuit comprises two diametrically positioned brake pads and the second circuit comprises the remaining four brake pads. In this way, the brake torque can be operated over a great range of torques.

Each opening is lined with a ring of a hard material, such as steel, which has a smooth surface, so that the brake pad can slide back and forward in the opening without any obstacle. By this mesure, the brake pads will be evenly worn over the whole width thereof.

By means of the disc brake according to the invention at least the following advantages are achieved. All parts, which are included in the disc brake, are positioned within the border of the disc brake and thus comprises an integrated unit. No projecting details or assembled units are required. No outer pneumatic hoses are required. One single membrane is used simultaneously for all pneumatic units and in order to seal the pneumatic channels. The number of details is considerably reduced, which entails a considerable cost

3

saving. The included details can easily be manufactured by conventional moulding techniques.

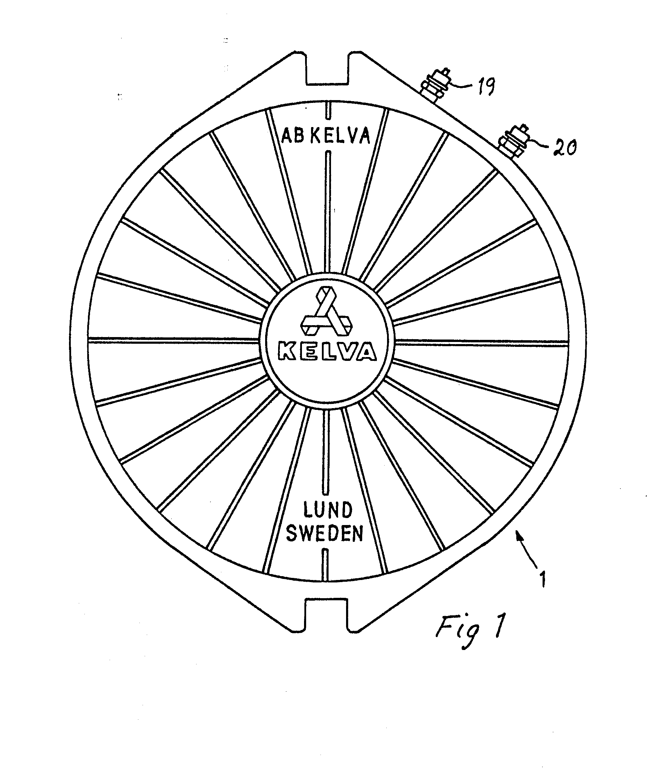

Further advantages and features will appear from the detailed description given below of a preferred embodiment of the intention by reference to the drawings. Fig. 1 is a plan view of the disc brake according to the invention. Fig. 2 is a cross-sectional view taken according to the line II-II in Fig. 3. Fig. 3 is a plan view taken according to the line III-III in Fig. 2.

In Figs. 1 and 2, the disc brake 1 according to the invention is shown. The disc brake comprises a disc 1 and a membrane housing 3 in two parts 4 and 5. The first part or housing 4 comprises bearings 6, a shaft spindle 7, a spacing washer 8 and a lock washer with a nut 9. The housing is procided with outer cooling vanes 10 and a cover 11 closes the central portion. The housing comprises diametrically positioned rectangular openings 12 intended to cooperate with complementary shaped members of the stand of the machine, in which the disc brake is mounted, in order to prevent the housing from rotating. The construction of the housing given above is in all essentials conventional.

Moreover, the housing is provided with six recesses 14, which appears more clearly from Fig. 3. Two recesses 14a and 14d, which are positioned diametrically opposite in relation to each other, are interconnected by a semi-circular recess or channel 15. The remaining recesses 14b, 14c, 14e and 14f are interconnected by a second recess or channel 16. All these recesses 14 and channels 15 and 16 are positioned in the inturned plane surface of the housing 4 and can be manufactured at the moulding of the housing in a single working step. Moreover, the housing 4 comprises two drilled channels 17 and 18, which connects the recesses 14a and 14b with each one pneumatic hose coupling 19 and 20. By connecting either of the hose couplings 19 and 20 to a pneumatic pressure source, the recesses 14a and 14d or the recesses 14b, 14c, 14e and 14f are connected to the pressure source.

Above the essentially plane, recessed, inturned surface of the housing 4 thus described, a circular or ring shaped membrane 21 is positioned. Above the membrane 21 the second part or the intermediate plate 5 of the membrane housing is positioned. The intermediate plate 5 is attached to the housing 4 with a great number of screws distributed around the recesses and channels. The intermediate plate 5 is provided with six through openings 22 positioned opposite to each recess 14 in the housing 4. These openings are circular and each opening comprises a brake pad 23. Between each brake pad and the membrane 21 there is an insert 23a, which distributes the pressure equally over the whole surface and also decreases the risk of overheating the membrane.

The housing 4 and the intermediate plate 5 are manufactured by cast aluminum. Above this membrane housing 3, the brake disc 2 is positioned. The disc is made of cast iron in order to be able to resist the high temperatures which can arise. As conventional, the disc brake is provided with cooling vanes 24 and cooling channels 25, which operates as a radial fan. The disc 2 is screwed to the shaft spindle 7 by means of several strong screws 26. The disc is also provided with a central opening 27 intended to receive the shaft of the roll which is intended to be braked. A stop screw 28 and a stop quoin 29 are adapted in connection with said opening.

The disc brake according to the invention operates according to the following. The disc is rotated together with the shaft, which is intended to be braked and the housing is retained against rotation by means of the openings 12. Pressurized air is supplied through one or both hose couplings 19 and 20 to the recesses 14 of the housing 4. The membrane portion which separates the recess 14 from the opening 22 is pressed outwards by the pressure in the recess and pushes, by means of the insert 23a the brake pad 23, outwards towards the disc 2, which is braked. The brake torque is dependent of the normal force between the brake pads and the disc and is thus proportional to the air pressure supplied. The brake torque is also dependent on how many brake pads are activated. It is possible to activate only two brake pads through the hose coupling 19, which is connected to the recesses 14a and 14d, or four brake pads through the hose coupling 20, which is connected to the recesses 14b, 14c, 14e and 14f, or all six brake pads.

In this way, a compact integrated unit is achieved, which comprises few details. Thus, the stock is cheaper and the maintenance is simpler. At the same time the risk for malfunction and operational disturbments are minimal.

The disc brake 1 according to the invention has some further features worth attention. Since the intermediate plate is made of cast aluminum, the inner surfaces of the openings 22 are somewhat rough. This means a certain risk of the brake pads to hitch the side surfaces of the opening 22 and that the pressure is not evenly distributed against the disc. Moreover, the circular brake pads have a tendency of rotating in the opening 22. Finally the cast aluminum has a certain resiliency, which also influence the operation. We have found that the brake pads are unevenly worn and that heavy vibrations and squeaks are obtained. In order to remedy this, each opening 22 is lined with a ring 30 of steel, the inner surface of which is smooth and hard and carefully parallel with the symmetry axis of the opening 22. In this way, the vibrations and any uneven wearing have been removed. By this steel ring 30 a very even wear of the brake pads is achieved.

In order to be able to inspect the brake pads at operation, holes, recesses or channels 31 have been made in the plate 5, as shown with broken lines in Fig. 2. These channels 31 are shown in Fig. 3 although they are positioned above the surface shown. By viewing the brake pads through said channels, the degree of wear of the brake pads can be monitored.

The brake pads can be of the low frictional type or the high frictional type. The disc brake according to the invention is intended to be used together with a source of pressurized air of maximum about 6 bar.

A preferred embodiment of the invention has been described above in order to clarify the invention. However, the intention is that said embodiment should not limit the scope of the invention, but modifications and alterations of said embodiment, which are obvious to a person skilled in the art are intended to fall within the scope of the invention. The invention is only limited by the appended patent claims.

CLAIMS

1. Disc brake comprising a rotating disc (2) and a stator, brake pads (22) being arranged on the stator movable between a position in contact with the disc and a position in which the disc is freely rotatable, c h a r a c t e r i z e d in that the stator comprises a first intermediate plate (5) having openings (22), in which the brake pads (23) are arranged; a second portion, preferably in the nature of a casting, which comprises recesses (14) positioned opposite to said openings, the intermediate plate being rigidly attached to the second portion; and a membrane (21) positioned between the plate (5) and the second portion in order to seal the recess (14) from the opening (22), whereby the recess operates as a cylinder for the related brake pad, the recesses (14) being interconnected by channels (15, 15) and connected to a pressure source for applying the brake pads against the disc.

2. Disc brake according to claim 1, c h a r a c t e r i z e d in that the recess (14) and the channels (15, 16) are moulded in the surface of the second portion (14) as depressions in said surface, and that the recesses and channels are essentially hermetically sealed by said membrane (21) in order to form said channels and cylinders.

3. Disc brake according to claim 1 or 2, c h a r a c t e r i z e d in that the recesses (14) are interconnected in a two-circuit system, in which the first circuit comprises two recesses (14a, 14d) interconnected by a first channel (15) and the second circuit comprises four recesses (14b, 14c, 14e, 14f) interconnected by a second channel (16).

4. Disc brake according to claim 1, 2 or 3, c h a r a c t e r i z e d in that the plate (5) and the second portion (4) are made of cast aluminum and that the disc (2) is made of cast iron.

5. Disc brake according to any of the prededing claims, c h a r a c t e r i z e d in that an insert (23a) is placed between each brake pad (23) and the membrane (21).

6. Disc brake according to claim 3, c h a r a c t e r i z e d in that each opening (22) is lined by a steel ring (30).

7. Disc brake according to any of the preceding claims, c h a r a c t e r i z e d in that an inspection hole (31) is arranged in the plate (5) from its periphery to the opening (22) for inspection
of the degree of wear of the brake pad.

Fig 1

Fig 2

Fig 3

0127180